# EUROPÄISCHE PATENTSCHRIFT

(11) **EP 2 539 984 B1**
(45) Veröffentlichungstag und Bekanntmachung des Hinweises auf die Patenterteilung: **29.04.2015**
(21) Anmeldenummer: 11702394.5
(22) Anmeldetag: 25.01.2011
(51) Int. Cl.: H02J 3/00, H02J 13/00

(54) **VORRICHTUNG UND VERFAHREN ZUR EINBINDUNG VON ELEKTRISCHEN GERÄTEN IN EIN SYSTEM IM RAHMEN DES DEMAND SIDE MANAGEMENTS**
DEVICE AND METHOD FOR INTEGRATING ELECTRIC DEVICES INTO A SYSTEM IN THE CONTEXT OF DEMAND-SIDE MANAGEMENT
DISPOSITIF ET PROCÉDÉ D'INTÉGRATION D'APPAREILS ÉLECTRIQUES DANS UN SYSTÈME DANS LE CADRE DE LA GESTION DE LA DEMANDE

(30) Priorität: 24.02.2010 DE 102010009090
(43) Veröffentlichungstag der Anmeldung: 02.01.2013
(73) Patentinhaber: Chemin GmbH, 86167 Augsburg (DE)
(72) Erfinder: SPIEGEL, Wolfgang, 86415 Mering (DE); ALBERT, Franz, Werner, 68199 Mannheim-Neckarau (DE)
(74) Vertreter: Flaccus, Rolf-Dieter
(86) Internationale Anmeldenummer: PCT/EP2011/000290
(87) Internationale Veröffentlichungsnummer: WO 2011/103950

(56) Entgegenhaltungen:
- EP-A2- 1 005 133
- GB-A- 713 452
- US-A1- 2003 002 234
- US-A1- 2004 075 343
- US-A1- 2008 024 008

## Beschreibung

Die vorliegende Erfindung befasst sich mit einer Vorrichtung und einem Verfahren zur Einbindung von elektrischen Geräten in ein System im Rahmen des Demand Side Managements.

Der Energiehaushalt des Stromnetzes ist Schwankungen unterworfen. Diese Schwankungen können langfristig oder kurzfristig sein. So können sich Angebot und Nachfrage über Jahre, Monate, Tage, aber auch binnen Sekunden ändern. Insbesondere bei Windkraftanlagen oder Solaranlagen hängt das Stromangebot von der herrschenden Wetterlage ab und kann sich bei schnellen Veränderungen des Wetters kurzfristig ändern.

Auch das Verbraucherverhalten kann, z. B. bei Übertragungen eines internationalen Fußballspiels, spürbare kurzfristige Änderungen des Energiehaushaltes des Stromnetzes bewirken.

Um solche Änderungen des Energiehaushaltes zu kompensieren, werden bei Engpässen in der Stromerzeugung oder einem Überangebot an Strom bisher bestimmte Kraftwerke oder einzelne große Elektrizität verbrauchende Geräte ab- oder zugeschaltet, um mit dieser Last den Energiehaushalt zu regulieren.

Eine Möglichkeit, große Elektrizität verbrauchende Geräte ab- oder zuzuschalten, wird im Rahmen des Demand Side Managements verwirklicht. Hierbei werden z.B. Kühltruhen und Gefriergeräte in Supermärkten für eine bestimmte Zeit abgeschaltet. Die Thermostate sind dabei vorher so eingestellt, dass sie die Lebensmittel bei einer etwas tieferen Temperatur kühlen bzw. gefrieren.

Der Nachteil der bisherigen Verfahren ist, dass sie einen weiten Bereich der Elektrogeräte, die als Kompensatoren dienen können, nämlich die Elektrogeräte in Privathaushalten, nicht in das Demand Side Management einbinden.

Bei der Einbindung von Elektrogeräten in Privathaushalten im Rahmen des Demand Side Managements gibt es in der Regel das Problem, dass diese Geräte an ihrem Standort nicht in der Nähe eines Bereiches stehen, in dem sie einfach ferngesteuert werden können. Zum Beispiel stehen Heizungen häufig in Kellerräumen, die in der Regel nicht über einen Internet- oder Telefonanschluss verfügen oder sogar gegen Funksignale abgeschirmt sind.

Zusätzlich gibt es bei den bestehenden Systemen das Problem, dass bisher keine Möglichkeit besteht, eine optimale Einschätzung der für das Demand Side Management zur Verfügung stehenden Verbrauchsressourcen zu treffen.

Der vorliegenden Erfindung lag die Aufgabe zugrunde, eine Vorrichtung und ein Verfahren zur Verfügung zu stellen, welche die oben aufgeführten Nachteile überwinden und es ermöglichen, gewöhnliche Elektrogeräte in Privathaushalten in das Demand Side Management optimal einzubinden.

Die Aufgabe wird durch eine Vorrichtung gemäß Anspruch 1 gelöst, die gezielt Elektrogeräte in Privathaushalten steuert, um sie zur Regelung des Energieangebotes zu nutzen.

Diese Vorrichtung umfasst mindestens eine Schalteinheit, welche den Strom zu dem betreffenden Elektrogerät ein- und ausschaltet, und mindestens eine Steuereinheit, welche mit der Schalteinheit in Datenkontakt steht und Steuersignale von einer externen Steuerstelle empfangen und bevorzugt auch senden kann.

Die Steuerstelle ist dabei eine Instanz, welche misst, wie sich das Stromangebot zur Nachfrage verhält und Entscheidungen trifft, welche Maßnahmen zur Kompensation von Energiespitzen oder einem Minderangebot ergriffen werden müssen.

Die Steuerstelle kann beispielsweise eine Zentrale eines Energieanbieters sein oder aber auch ein Gerät, welches autonom den Energiehaushalt misst.

Die Steuersignale werden bevorzugt über ein Datennetz, z.B. Internet, Fernsprechnetze oder Funknetze an die Steuereinheit übermittelt, wobei ein solches Netzwerk auch nur aus einer einzigen Datenverbindung zwischen Steuerstelle und Steuereinheit bestehen kann.

Die Steuereinheit setzt die von der Steuerstelle empfangenen Daten in Schaltsignale um und sendet diese über einen Datenkanal an die Schalteinheit. Vorzugsweise ist auch eine Übertragung von Daten von der Schalteinheit zur Steuereinheit möglich.

Die Schaltsignale werden bevorzugt über Datenleitungen, Funk oder ein Datennetz, z.B. ein kabelgestütztes Netz (LAN) oder ein Funknetz (WLAN), an die Schalteinheit übermittelt, wobei ein solches Netzwerk auch nur aus einer einzigen Datenverbiridung zwischen Steuereinheit und Schalteinheit bestehen kann.

Ein bevorzugter Datenkanal zur Übermittlung der Schaltsignale ist die Stromleitung, die zum Elektrogerät führt. Die Schaltsignale werden dabei vorzugsweise als Amplitudenmodulation auf die Netzspannung moduliert.

Zum Ein- oder Ausschalten sind in der Regel nur wenige unterschiedliche Signale nötig (z.B. EIN-, AUS-, und Kontroll- bzw. Bedarfssignale). Diese Signale bestehen nur aus wenigen Informationen (wenigen Bits, wenigen Bytes oder wenigen Kilobytes). Für einen Fachmann ist das Rauschen auf den Leitungen bei der Übermittlung solch geringer Datenmengen kein Problem. Auch geeignete Protokolle für einen solchen Datenverkehr auf verrauschten Leitungen sind dem Fachmann bekannt.

Vorzugsweise bestehen die Schaltsignale aus wenigen Kilobytes, insbesondere wenigen Bytes oder sogar nur wenigen Bits.

Bei einer bevorzugten Ausführungsform enthält das Schaltsignal auch eine Adresse, um gezielt mehrere verschiedene Schalteinheiten mit nur einer einzigen Steuereinheit ansprechen zu können.

Die Schalteinheit schaltet bei Empfang eines EIN-Schaltsignals die Energiezufuhr für das Elektrogerät ein und vorzugsweise bei Empfang eines AUS-Schaltsignals das Elektrogerät gegebenenfalls nach dem Eintritt zusätzlicher Voraussetzungen aus.

In einer weiteren bevorzugten Ausführungsform schaltet die Schalteinheit bei Empfang eines EIN-Schaltsignals die Energiezufuhr für das Elektrogerät ein und bei Nicht-Empfang dieses EIN-Schaltsignals das Elektrogerät gegebenenfalls nach dem Eintritt zusätzlicher Voraussetzungen aus.

Die Schalteinheit ist dabei bevorzugt in der Lage, den Strom nur für das betreffende Elektrogerät zu schalten oder aber für den gesamten Stromkreis, mit dem dieses Elektrogerät verbunden ist.

Es ist möglich, mit solch einer Vorrichtung auch die mögliche zu verbrauchende Energie der einzelnen Systeme dem Energieanbieter bekanntzumachen und so die Möglichkeit zu eröffnen, die Verbrauchsressourcen in das Side Demand Management einzubinden.

Dazu enthält die Vorrichtung zusätzlich mindestens eine Bedarfsermittlungseinheit, die ermittelt, welchen Energiebedarf der Verbraucher noch hat.

In einer bevorzugten Ausführungsform sendet eine Bedarfsermittlungseinheit eine Bedarfsinformation an die Schaltstelle. Dies geschieht bevorzugt dadurch, dass diese Bedarfsinformationen an die Schalteinheit gesendet werden, die diese über die Steuereinheit an die Steuerstelle weitersendet. Diese Bedarfsinformation enthält vorzugsweise Informationen, welche die Bedarfsermittlungseinheit, die Schalteinheit oder den Verbraucher identifizieren (Geräteadresse), und Informationen über die Energie, die in dem folgenden Zeitintervall durch das Gerät verbraucht werden kann (Energiebedarf). Dieses Zeitintervall beträgt vorzugsweise eine Zeitspanne aus der Gruppe gesamte Nacht, gesamter Tag, Stunden, Minuten, Sekunden.

Die Bedarfsermittlungseinheit ermittelt die für die Bedarfsinformation erforderlichen Daten vom Verbraucher, z.B. durch Messungen oder eine Ermittlung des Ablaufprogramms des Verbrauchers und/oder der Schalteinheit. Vorzugsweise wird davon jedoch die Geräteadresse ausgenommen, da diese durch den Energieanbieter selbst vorgegeben werden sollte. Dazu enthält die Bedarfsermittlungseinheit mindestens ein Messgerät und/oder mindestens eine Recheneinheit, welche den zu erwartenden Verbrauch des Verbrauchers bestimmen können und in der Schalteinheit verständliche Informationen umsetzen können.

Beispielsweise würde dies für eine elektrische Heizpatrone für eine Heizung oder einen Boiler realisiert, in dem mittels eines Temperaturfühlers und einer Recheneinheit anhand der Temperatur des zu heizenden Mediums bestimmt wird, welche Wärmemenge bis zum Morgen eingebracht werden kann. Die Bedarfsermittlungseinheit wird hier durch den Temperaturfühler und die Recheneinheit gebildet.

Ähnliches kann bei Kühlschränken angewandt werden, wobei hier ebenfalls die Temperatur gemessen und berechnet wird, wie oft in dem Zeitintervall ein Kühlzyklus stattfinden muss.

Als weiteres Beispiel dient eine Waschmaschine oder ein Trockner, der von dem Schaltsignal eingeschaltet werden kann und der Schalteinheit übermittelt, wie viel Energie das Gerät in der Zeit seines Arbeitszyklus verbrauchen wird.

In einer vorteilhaften Ausführungsform misst eine Messeinheit in einer durch die Schalteinheit gesteuerten Heizung die Freiheitsgrade der in Kessel bzw. Brauchwasserspeicher noch zusätzlich speicherbaren Wärme und gibt innerhalb dieser Bedingungen den elektrischen Bezug aus den Stromnetzen nach den Vorgaben der Netzsteuerung frei oder sendet diese Daten an die Steuereinheit, welche sie an die Steuerstelle weitergibt.

Auf diese Weise erhält die Steuerstelle zusätzliche Daten, die bei Entscheidungen zur Lastkompensation dienlich sind.

Geeignete Elektrogeräte in Privathaushalten sind diejenigen Geräte, deren EIN/AUS-Zustand in der Regel nicht an eine vom Verbraucher gewünschte Zeit gebunden sind.

Dies sind z.B. elektrische Heizungen, Waschmaschine, Spülmaschine, Trockner oder Kühlschrank. Bei diesen Elektrogeräten kann der Zugriff zu bestimmten Zeiten zwar spontan sein, wenn z.B. dringend gewaschen werden muss oder das Kühlschranklicht benötigt wird, jedoch ist ein normaler Betrieb, z.B. das Kühlen, Heizen oder das normale Waschen zumindest zur Nachtzeit vom Verbraucher unabhängig. Insbesondere bei Heizvorgängen ist eine kurzfristige Schaltdynamik möglich, weil kein komplettes Programm ablaufen muss, sondern jedes Anschalten eine Wärmemenge einbringt.

In einer bevorzugten Ausführungsform besitzt die Schalteinheit zusätzlich mindestens eine Einheit, mit der ein Einoder Ausschalten unabhängig vom Steuersignal erreicht werden kann. Dies sind vorzugsweise Einheiten aus der Gruppe der Schalter zum manuellen Einschalten und Schaltuhren. Die Schalter haben den Vorteil, dass ein spontaner Zugriff auf das Gerät möglich ist, z.B. wenn das Kühlschranklicht brennen soll oder wenn spontan gewaschen wird.

Die Schaltuhr hat den Vorteil, dass das Gerät zur Not auch ohne ein Steuersignal angeschaltet wird, damit auch ohne das Vorherrschen eines Überangebotes an Strom oder bei Störung des Steuersignals das Gerät seine Aufgabe erfüllt, z.B. dass Lebensmittel trotzdem gekühlt werden oder die Wäsche trotzdem über Nacht gewaschen wird.

In einem Privathaushalt können Probleme dadurch auftreten, dass sich die Schalteinheit nicht einfach und kostengünstig in ein bereits vorhandenes Elektrogerät integrieren lässt.

In einer bevorzugten Ausführungsform ist die Schalteinheit daher so ausgestaltet, dass sie auf einer Seite mit der Steckdose, mit welcher das Elektrogerät an das Stromnetz angeschlossen wird, verbunden werden kann, und auf der anderen Seite mit dem Stecker des Elektrogerätes verbindbar ist. Das Schaltgerät schaltet dabei den Strom zwischen Steckdose und Elektrogerät nach Empfang der betreffenden Schaltsignale.

In einer anderen bevorzugten Ausführungsform ist die Schalteinheit dermaßen gestaltet, dass sie wie eine normale Sicherung in den Sicherungskasten eingebaut werden kann und von dort den Stromkreis des Elektrogerätes schaltet. Diese Ausführungsformen haben den Vorteil, dass die Schalteinheit auf einfache Weise das betreffende Elektrogerät schalten kann, ohne große Einbaukosten zu verursachen.

In einer weiteren bevorzugten Ausführungsform schaltet die Schalteinheit das Elektrogerät nicht sofort aus, wenn es von der Steuereinheit gesendete Signale zum Ausschalten erhält oder die Zeitschaltuhr in den AUS-Modus wechselt, sondern wartet, bis das Elektrogerät seine Aufgabe vollendet hat.

Dies geschieht bevorzugt dadurch, dass mindestens eine Messeinheit in der Schalteinheit die vom Elektrogerät verbrauchte Energie misst und die Schalteinheit erst dann ausschaltet, wenn nach einer festgelegten Zeit keine Energie mehr verbraucht wird oder der Energieverbrauch unter einer vorzugsweise einstellbaren Schwelle liegt.

Dies hat den Vorteil, dass z.B. Kühlschränke beim Herunterkühlen nicht unterbrochen werden und Waschmaschinen oder Trockner nicht mitten in ihrem Programm ausschalten.

Bevorzugte Messeinheiten sind Strommessgeräte, welche den durch das Elektrogerät fließenden Strom messen. Die Stromstärke wird während des Betriebes viel höher sein als nach Abschluss des Programms des jeweiligen Elektrogerätes.

Insbesondere für den Fall, dass die Schalteinheit nicht einfach von der Steuereinheit kontaktiert werden kann, z.B., wenn die Steuereinheit in der Wohnung mit dem Internet verbunden ist und sich die Schalteinheit und das Elektrogerät im Keller befinden, ist die nachfolgend beschriebene Ausführungsform vorteilhaft.

In dieser Ausführungsform ist die Steuereinheit in zwei Komponenten, "Empfangskomponente" und "Sendekomponente", unterteilt. Die erste Komponente, "Empfangskomponente", empfängt die Steuersignale der Steuerstelle über ein Datenübertragungsnetz.

Die Empfangskomponente sendet nun, entsprechend den Steuerdaten, interne Daten an die Sendekomponente. Dies kann über einen eigenen Datenkanal geschehen. Ein vorteilhafter Datenkanal ist eine Funkverbindung, wie sie beispielsweise auch bei schnurlosen Telefonen verwendet wird. Der Vorteil dieser Funkverbindung ist, dass keine Kabel in der Wohnung verlegt werden müssen.

Die Sendekomponente ist an einem Ort untergebracht, an dem eine einfache Datenverbindung mit der Steuereinheit hergestellt werden kann. Eine Datenverbindung mit der Schalteinheit kann insbesondere als Funkverbindung ausgestaltet sein, wobei in diesem Falle die Sendekomponente eher den Rang einer Relaisstation einnimmt. Eine bevorzugte Datenverbindung mit der Schalteinheit wird über den Stromkreis des Elektrogeräts mittels Datensendung über die Stromleitung hergestellt. In diesem Falle befindet sich die Sendekomponente vorzugsweise direkt im Sicherungskasten und ist in der betreffenden Sicherung für den Stromkreis des Elektrogerätes integriert.

Natürlich kann in dem Falle, dass eine Kontaktierung mit der Steuerstelle im Bereich des Sicherungskastens hergestellt werden kann, die gesamte Steuereinheit auch in einer solchen Sicherung integriert sein.

Beispiele für das erfindungsgemäße System sind in den Abbildungen dargestellt.
Figur 1 skizziert eine bevorzugte Ausführungsform mit einer Funkübertragung.
Figur 2 skizziert eine bevorzugte Ausführungsform in einem Mehrfamilienhaus.
Figur 3 skizziert eine bevorzugte Ausführungsform mit einer Heizanlage.

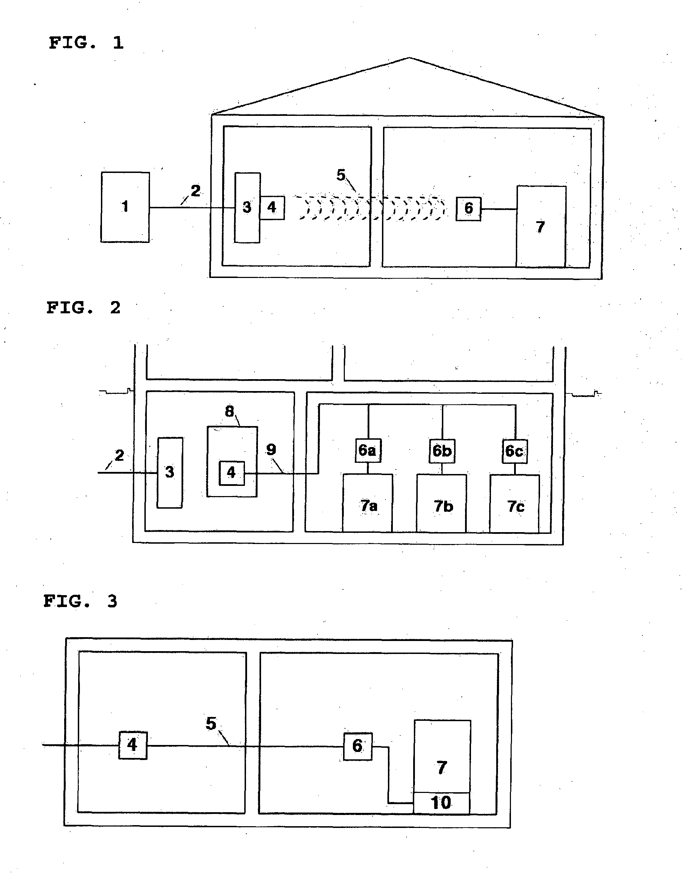

Bei einer bevorzugten Ausführungsform nach Figur 1 sendet eine Steuerstelle (1), z.B. die Zentrale eines Energielieferanten, via Internet (2) an eine internetfähige Empfangsanlage in einem Privathaushalt (3) ein Steuersignal. Diese Anlage kann z.B. eine Telefonanlage mit angeschlossenem Router sein oder eine Empfangsanlage für einen drahtlosen Internetempfang. An diese Anlage ist die Steuereinheit (4) angeschlossen, welche von der Steuerstelle korrekt adressiert wurde, und welche die Steuersignale empfängt. Die Steuersignale werden von der Steuereinheit in Schaltsignale umgesetzt und per Funk (5) an die Schalteinheit (6) gesendet. Dabei kann die Kommunikation nur ein einfaches EIN-Signal enthalten oder aber mehrere Signale, z. B. EIN/AUS-Signale von der Steuereinheit und VERSTANDEN-Signale von der Schalteinheit. Außerdem kann das Schaltsignal auch eine Adresse enthalten, um mehrere Schalteinheiten ansprechen zu können.

Die Schalteinheit ist wie eine herkömmliche Schaltuhr in eine Steckdose eingesteckt und der Stecker des Elektrogerätes (7), z.B. einer elektrischen Heizpatrone für eine Heizanlage) mit der Schalteinheit verbunden.

Erhält nun die Schalteinheit das EIN-Signal, stellt sie den Kontakt zwischen Elektrogerät und Steckdose her.

Vorzugsweise hat das Elektrogerät (7) zu Beginn der Nacht, des Tages oder einem anderen voreingestellten Zeitpunkt eine Bedarfsinformation an die Steuerstelle gesendet. Darin enthalten war unter anderem die Information, welche Energiemenge in der der Bedarfsinformation folgenden Zeit voraussichtlich verbraucht werden würde.

Für den Fall, dass sich etwas ändern sollte (z.B. im Hinblick auf die Heizpatrone ein plötzlicher Temperatursturz), besteht vorzugsweise die Möglichkeit, mehrfach eine jeweils aktuelle Bedarfsinformation zu senden.

Ist das Elektrogerät bei seiner normalen Verrichtung an ein Ablaufprogramm gebunden (z.B. bei einer Waschmaschine oder einem Trockner), dann ist es vorteilhaft, wenn ein in der Schalteinheit eingebautes Messgerät den durch die Schalteinheit fließenden Strom zum Elektrogerät misst. Steigt dieser Strom an, dann ist klar, dass das Gerät arbeitet, sinkt der Strom unter eine bestimmte Schwelle ab und bleibt eine bestimmte Zeitspanne auf diesem niedrigen Niveau, schaltet die Schalteinheit ab, weil dann der Arbeitszyklus des Elektrogeräts beendet sein sollte.

Es bietet sich an, Kühlschränke auf eine etwas tiefere Kühltemperatur einzustellen, weil dann die Intervalle zwischen nötigen Kühlzyklen zeitlich weiter auseinander liegen können.

In Figur 2 ist ein Ausführungsbeispiel dargestellt, bei dem mehrere Elektrogeräte (z.B. Waschmaschinen oder Trockner) in einem Mehrfamilienhaus von einer einzigen Steuereinheit (3) gesteuert werden. Der folgende Aufbau ist insbesondere vorteilhaft, wenn die zentrale Telefonleitung das Mehrfamilienhaus in der Nähe des Sicherungskastens (8) erreicht. In diesem Falle ist die Möglichkeit gegeben, eine Schalteinheit zu verwenden, welche auf der einen Seite wie eine gewöhnliche Haushaltssicherung funktioniert, und welche die Schaltsignale als Modulationen der Wechselspannung über den Stromkreis (9) der Elektrogeräte sendet. Die Schalteinheit ist über ein Kabel, (z.B. USB) mit einer Internetempfangseinheit (2) verbunden, über die sie die Steuersignale bezieht.

Die Schaltsignale enthalten hier die Adresse der jeweils angesprochenen Schalteinheit (6a, 6b oder 6c). Die Steuereinheiten empfangen die Signale auf der Stromleitung und schalten bei Empfang ihrer individuellen Adresse in Kombination mit dem EIN-Signal das betreffende Elektrogerät (7a, 7b, oder 7c) ein. Dabei sind die Schalteinheiten mit den Elektrogeräten wie in der Ausführungsform nach Figur 1 verbunden.

Hierbei können Protokolle aus dem Bereich des Ethernets verwendet werden.

In Figur 3 ist ein Ausführungsbeispiel dargestellt, bei dem eine Heizung (7), welche eine elektrische Heizeinheit (10) enthält, durch die Schalteinheit (4), deren Datenverbindung mit der Schaltstelle hier nicht mehr dargestellt wird, und die Schalteinheit (6) geschaltet werden kann.

Analog zu Kühlschränken kann es vorteilhaft sein, die Heiztemperatur etwas über dem normalen Level einzustellen, da in diesem Falle längere Pausen zwischen den Heizzyklen möglich sind. Insbesondere weist die Heizungsanlage als Heizeinheit eine Elektroheizpatrone (abgeschätzt 3-4 kW) auf. In einer vorteilhaften Ausführungsform misst eine Messeinheit in der Schalteinheit die Freiheitsgrade der in Kessel bzw. Brauchwasserspeicher noch zusätzlich speicherbaren Wärme und gibt innerhalb dieser Bedingungen den elektrischen Bezug aus den Stromnetzen nach den Vorgaben der Netzsteuerung frei oder sendet diese Daten an die Steuereinheit, welche sie an die Steuerstelle weitergibt.

Auf diese Weise erhält die Steuerstelle zusätzliche Daten, die bei Entscheidungen zur Lastkompensation dienlich sind.

Ein bevorzugter Modus zum Regeln des Energieangebotes ist, dass die Schaltstelle in einem vorher definierten Zeitintervall stets einem Anteil der auf diese Weise kontrollierten Elektrogeräte Signale zum Einschalten sendet, insbesondere im Normalfall der Hälfte.

Bei einem Überangebot an Energie wird dieser Anteil verringert bzw. bei einem Unterangebot an Energie dieser Anteil erhöht.

Insbesondere sollten die Elektrogeräte, welchen die Signale zum Einschalten gesendet werden, stetig wechseln, so dass sich der Gesamtanteil im Normalfall nicht verändert. So ist die Wahrscheinlichkeit, dass jedes Gerät einmal in einem definierten Zeitraum seine Tätigkeit verrichten kann, am größten. Auf diese Weise wird gewährleistet, dass zu Zeiten höheren Energieangebotes auch mehr Verbraucher Energie verbrauchen und zu Zeiten eines geringeren Energieangebotes weniger Verbraucher Energie verbrauchen.

## Patentansprüche

1. Vorrichtung zur Einbindung von Elektrogeräten in ein System im Rahmen des Demand Side Managements, **dadurch gekennzeichnet, dass** sie mindestens eine Schalteinheit umfasst, welche den Strom zu dem betreffenden Elektrogerät ein- und ausschaltet, mindestens eine Bedarfsermittlungseinheit, die den in einem definierten Zeitintervall von dem betreffenden Elektrogerät zu erwartenden Energiebedarf bestimmt, und mindestens eine Steuereinheit, welche mit der Schalteinheit in Datenkontakt steht und Steuersignale von einer externen Steuerstelle empfangen und vorzugsweise auch senden kann, wobei jede Schalteinheit nach Empfang eines für sie bestimmten EIN-Signals durch die Steuereinheit das betreffende Elektrogerät einschaltet.

2. Vorrichtung nach Anspruch 1, dadurch gekenntzeichnet, dass die Schalteinheit so gestaltet ist, den Strom nur für das betreffende Elektrogerät zu schalten oder für den gesamten Stromkreis, mit dem dieses Elektrogerät verbunden ist, zu schalten, insbesondere ist die Schalteinheit dermaßen gestaltet, dass sie wie eine normale Sicherung in den Sicherungskasten eingebaut werden kann und von dort den Stromkreis des Elektrogerätes schaltet.

3. Vorrichtung nach einem der vorangehenden Ansprüche, **dadurch gekennzeichnet, dass** die mindestens eine Bedarfsermittlungseinheit die Bedarfsinformation, vorzugsweise über die Schalteinheit, an die Steuerstelle sendet.

4. Vorrichtung nach einem der vorangehenden Ansprüche, **dadurch gekennzeichnet, dass** die Schalteinheit auf einer Seite mit der Steckdose, mit welcher das Elektrogerät an das Stromnetz angeschlossen wird, verbunden werden kann, und auf der anderen Seite mit dem Stecker des Elektrogerätes verbindbar ist, und den Strom zwischen Steckdose und Elektrogerät nach Empfang der betreffenden Schaltsignale schaltet.

5. Vorrichtung nach einem der vorangehenden Ansprüche, **dadurch gekennzeichnet, dass** die Schalteinheit mindestens eine Messeinheit enthält, welche die vom Elektrogerät verbrauchte Energie misst und erst dann ausschaltet, wenn nach einer festgelegten Zeit keine Energie mehr verbraucht wird, wobei bevorzugte Messeinheiten Strommessgeräte sind, welche den durch das Elektrogerät fließenden Strom messen.

6. Verfahren zur Einbindung von elektrischen Geräten in ein System im Rahmen des Demand Side Managements, **dadurch gekennzeichnet, dass** mindestens eine Schalteinheit, welche den Strom zu dem betreffenden Elektrogerät ein- und ausschaltet, mit mindestens einer Steuereinheit in Datenkontakt steht, wobei die Steuereinheit Steuersignale von einer externen Steuerstelle empfängt, die von der Steuerstelle empfangenen Daten in Schaltsignale umsetzt, und diese über einen Datenkanal an die Schalteinheit sendet, und mindestens eine Bedarfsermittlungseinheit den in einem definierten Zeitintervall vom Elektrogerät zu erwartenden Energiebedarf bestimmt.

7. Verfahren nach Anspruch 6, **dadurch gekennzeichnet, dass** die Schaltsignale über ein Datennetz aus der Gruppe kabelgestützte Netze und Funknetze an die Schalteinheit übermittelt werden, wobei ein solches Netzwerk auch nur aus einer einzigen Datenverbindung zwischen Steuereinheit und Schalteinheit bestehen kann, und vorzugsweise die Schaltsignale über die Stromleitung, die zum Elektrogerät führt, gesendet werden.

## Claims

1. Device for integrating electric devices into a system in the context of demand-side management, **characterised in that** it comprises at least one switching unit that switches the *electric current* to the corresponding electric device on or off, at least one demand determination unit that determines the energy demand of the corresponding electric device to be expected within a defined time interval, and at least one control unit which is in data-transmitting contact with the switching unit and which can receive control signals from an external control point and can preferably also transmit same, wherein each switching unit switches the corresponding electric device on after receiving an ON-signal from the said control unit that is destined for it.

2. The device according to claim 1, **characterised in that** the switching unit is configured to switch the electric current on or off for the corresponding electric device only, or for the whole electric circuit with which this electric device is connected, more particularly, the switching unit is configured such that it can be installed like a normal fuse in a fuse box and from there switches the electric circuit of the electric device on or off.

3. The device according to any one of the preceding claims, **characterised in that** the at least one demand determination unit transmits the demand information to the control unit, preferably via the switching unit.

4. The device according to any one of the preceding claims, **characterised in that** the switching unit can be connected on one side with the socket by means of which the electric device is connected to the power supply system, and can be connected on the other side with the plug of the electric device, and switches the electric current between the socket and the electric device on or off after receiving the corresponding switching signals.

5. The device according to any one of the preceding claims, **characterised in that** the switching unit contains at least one metering unit that measures the energy consumed by the electric device and switches off only when, after a predetermined time, energy is no longer being consumed, preferred metering units being current measuring instruments that measure the current flowing through the electric device.

6. A Method for integrating electric devices into a system in the context of demand-side management, **characterised in that** at least one switching unit, which switches the *electric current* to the corresponding electric device on or off, is in data-transmitting contact with at least one control unit, wherein said control unit receives control signals from an external control point, converts the data received from the control point into switching signals and sends same via a data channel to the switching signal, and that at least one demand determination unit determines the energy demand of the electric device to be expected within a defined time interval.

7. The method according to claim 6, **characterised in that** the switching signals are transmitted to the switching unit via a data network from the group of wired networks and wireless networks, wherein optionally such a network may consist of only a single data connection between the control unit and the switching unit, and that preferably the switching signals are sent via the current lead that leads to the electric device.

## Revendications

1. Dispositif d'intégration d'appareils électriques dans un système dans le cadre de la gestion de la demande (demand side management), **caractérisé en ce que** le dispositif comprend au moins une unité de commutation qui connecte et déconnecte le courant menant à l'appareil électrique concerné, au moins une unité d'évaluation des besoins qui détermine les besoins énergétiques prévisibles pendant un intervalle de temps défini de l'appareil électrique concerné, et au moins une unité de commande qui est en contact de données avec l'unité de commutation et peut recevoir des signaux de commande d'un poste de commande externe et de préférence aussi en envoyer, chaque unité de commutation allumant l'appareil électrique concerné après réception d'un signal d'allumage de l'unité de commutation qui lui est destiné.

2. Dispositif selon la revendication 1, **caractérisé en ce que** l'unité de commutation est conçue pour commuter le courant uniquement pour l'appareil électrique concerné ou pour commuter le courant pour l'ensemble du circuit auquel cet appareil est connecté, en particulier l'unité de commutation est conçue de telle sorte qu'elle puisse être montée comme un fusible classique dans le coffret à fusibles et commute de là le circuit de l'appareil électrique.

3. Dispositif selon l'une des revendications précédentes, **caractérisé en ce que** la au moins une unité d'évaluation des besoins envoie l'information des besoins, de préférence via l'unité de commutation, au poste de commande.

4. Dispositif selon l'une des revendications précédentes, **caractérisé en ce que** l'unité de commutation peut être reliée d'un côté à la prise de courant par laquelle l'appareil électrique est connecté au circuit et être reliée de l'autre côté à la fiche de l'appareil électrique, et elle commute le courant entre prise de courant et appareil électrique après réception des signaux de commutation concernés.

5. Dispositif selon l'une des revendications précédentes, **caractérisé en ce que** l'unité de commutation comporte au moins une unité de mesure qui mesure l'énergie consommée par l'appareil électrique et ne s'éteint que si à l'issue d'une période définie plus aucune énergie n'est consommée, les unités de mesure préférées étant des ampèremètres qui mesurent le courant parcourant l'appareil électrique.

6. Procédé d'intégration d'appareils électriques dans un système dans le cadre de la gestion de la demande (demand side management), **caractérisé en ce qu'**au moins une unité de commutation qui connecte et déconnecte le courant menant à l'appareil électrique concerné est en contact de données avec au moins une unité de commande, laquelle unité de commande reçoit des signaux de commande d'un poste de commande externe, convertit les données reçues du poste de commande en signaux de commutation et envoie ceux-ci via un canal de données à l'unité de commutation, et au moins une unité d'évaluation des besoins détermine les besoins énergétiques prévisibles pendant un intervalle de temps défini de l'appareil électrique.

7. Procédé selon la revendication 6, **caractérisé en ce que** les signaux de commutation sont transmis à l'unité de commutation via un réseau de données du groupe des réseaux câbles et réseaux radio, un tel réseau pouvant aussi être constitué d'une seule ligne de données entre unité de commande et unité de commutation, et de manière préférentielle les signaux de commutation sont envoyés via la ligne électrique qui mène à l'appareil électrique.
